Europäisches Patentamt

European Patent Office

Office européen des brevets

(11) Veröffentlichungsnummer: **0 117 226**
**A2**

# (12) EUROPÄISCHE PATENTANMELDUNG

(21) Anmeldenummer: **84810034.3**

(22) Anmeldetag: **19.01.84**

(51) Int. Cl.³: **G 01 C 9/20**
**G 01 C 9/06**

(30) Priorität: **28.01.83 CH 502/83**

(43) Veröffentlichungstag der Anmeldung:
**29.08.84 Patentblatt 84/35**

(84) Benannte Vertragsstaaten:
**AT BE CH DE FR GB IT LI LU NL SE**

(71) Anmelder: **Engler, Max**
**Solothurnerstrasse 187**
**CH-4600 Olten(CH)**

(72) Erfinder: **Engler, Max**
**Solothurnerstrasse 187**
**CH-4600 Olten(CH)**

(74) Vertreter: **White, William et al,**
**PATENTANWALTS-BUREAU ISLER AG Postfach 6940**
**Walchestrasse 23**
**CH-8023 Zürich(CH)**

(54) **Messinstrument zum Feststellen von Abweichungen bezüglich dem Lot und/oder der Waagrechten und Verwendung desselben.**

(57) Eine elecktronisch anzeigende Wasserwaage besteht aus einem Messwertgeber (31) in einer Messlatte (30) mit einem Messwertverstärker (34) mit Stromversorgung (35) und Anzeigenfeld (37). Der Messwertgeber (31) setzt sich aus Stromschienen entlang der Zylinderwand eines zylindrischen Hohlraumes und einem Elektrolyten in diesem Hohlraum zusammen. Durch paarweise Anordnung der Stromschienen und Unterteilung derselben unter einem Winkel von 30° zur langen Stirnseite (41) der Messlatte (30) können Abweichungen im Bereich zwischen -15° und +105° angezeigt werden und zwar gegenüber dem Lot und/oder gegenüber der Horizontalen.

Fig.3

EP 0 117 226 A2

- 1 -

Messinstrument zum Feststellen von Abweichungen bezüglich dem Lot und/oder der Waagrechten und Verwendung desselben

Die vorliegende Erfindung betrifft ein Messinstrument zum Feststellen von Abweichungen bezüglich dem Lot und/oder der Waagrechten gemäss dem Oberbegriff des unabhängigen Patentanspruchs 1 sowie eine Verwendung desselben gemäss dem Oberbegriff des unabhängigen Patentanspruchs 10.

Für die Lot- und Waagrechtstellung und zum Messen geringer Neigungen oder Linien und Ebenen werden seit langem Dosen- oder Röhrenlibellen benützt. Die Dosenlibelle ist ein zylindrisches Gefäss, das mit einem innenseitig kugelförmig geschliffenen Glasdeckel geschlossen ist. Im Gefäss befindet sich eine Flüssigkeit und dünne Luft. Durch den Druck der dichteren Flüssigkeit wird die Luft am Glasdeckel zu einer linsenförmigen Blase zusammengedrängt. Der Radius der kugeligen Fläche liegt zwischen 500 und 2000 mm, so dass Abweichungen von $1^o$ bis $3^o$ eine verhältnismässig grosse Auslenkung bewirken können.

Bei der Röhrenlibelle ist wenigstens ein Teil der Mantelfläche eines im übrigen zylinderförmigen Körpers tonnenartig ausgeschliffen. Eine dichte Flüssigkeit und dünne Luft ergeben auch hier eine Blase an der höchsten Stelle der tonnenförmigen Wand. Striche in der durchsichtigen Wand von 2 mm oder 1 Pariser Linie (= 2,26 mm) lassen eine scharfe Bestimmung des Zentrums und einer allfälligen Abweichung zu.

Derartige Libellen sind bei Handwerkern in Verbindung mit messlattenförmigen Stäben als sogenannte Wasserwaagen gut bekannt.

Zur Bildung eines Horizontes sind kommunizierende Röhren ebenfalls bekannt, die mit einer Flüssigkeit gefüllt sind und mit denen über grosse Strecken eine der Erdkrümmung folgende Linie bestimmt werden kann. In der FR-A 74 06386 ist beispielsweise ein Kippwarngerät auf dieser Basis beschrieben. In dem U-förmig ausgebildeten Gefäss sind zwei Schwimmer angeordnet. Mit einem solchen Gerät kann aber nur die Neigung in der durch die Achsen der beiden Schenkel bestimmten Ebene erfasst werden.

Ein Gerät, mit dem die Neigung bezüglich der Horizontalen in jeder Richtung messbar sein soll, ist in der CH-A 621 192 beschrieben. In einem Ringgefäss mit lichtdurchlässiger Wand sind an den Seitenwänden Lichtempfänger und Lichtsender sich gegenüberliegend angebracht. Eine im Ringgefäss vorhandene Flüssigkeit wirkt als Lichtschranke. Damit kann die Orientierung und das Mass der Neigung bezüglich der Horizontalen in relativ grober digitaler Teilung angezeigt werden. Auf diese Weise lässt sich jedoch keine Wasserwaage bauen, weil bei dieser eine sehr feine Stufung verlangt wird, und sowohl eine Abweichung gegenüber der Horizontalen als auch gegenüber der Vertikalen angezeigt werden muss.

Demgegenüber ist es somit eine Aufgabe der Erfindung, ein Messinstrument zur Anzeige einer Abweichung von der Horizontalen und/oder von der Vertikalen zu schaffen, das handlich ist und dieselben Eigenschaften besitzt wie eine herkömmliche Wasserwaage, bei der jedoch eine Anzeige in Zahlenwerten ermöglicht ist.

Erfindunsgemäss wird dies bei einem Messinstrument durch die Merkmale im kennzeichnenden Teil des unabhängigen Patentanspruchs 1 erreicht. Eine Verwendung des Messinstrumentes ist im unabhängigen Patentanspruch 10 gekennzeichnet.

Ein Ausführungsbeispiel der Erfindung wird nachfolgend anhand
der Zeichnung erläutert. Es zeigen:

Fig. 1 eine perspektivische Darstellung eines Messwertgebers,

Fig. 2 ein Schaltungsschema für einen Verstärker zur Auswertung der Messwerte für eine digitale Darstellung,
und

Fig. 3 eine perspektivische Darstellung einer Wasserwaage
unter Verwendung des Messwertgebers gemäss Fig. 1
und des Verstärkers gemäss Fig. 2 zum Teil im Schnitt.

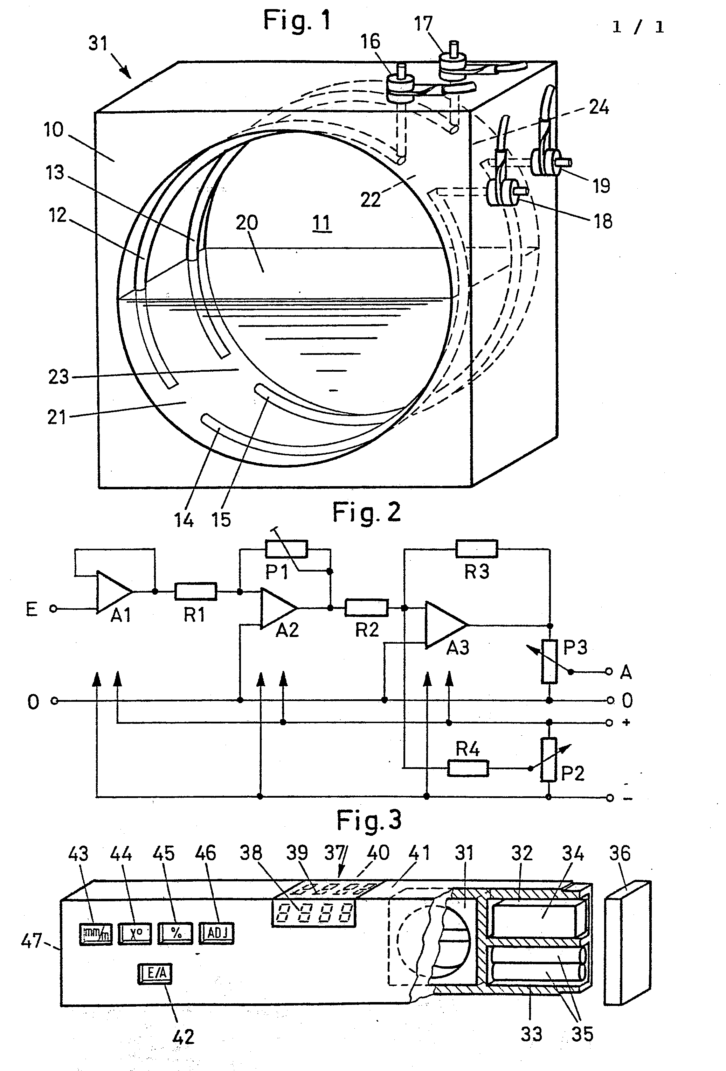

Der Messwertgeber gemäss Fig. 1 besteht aus einem Hohlkörper
10 mit quadratisch prismatischer Aussenform und einem
zylindrischen Hohlraum 11. An der Zylinderwand des Hohlraumes
11 befinden sich Stromschienen 12, 13, 14 und 15, die paarweise nebeneinander und auf dem Umfang im Abstand voneinander
angeordnet sind. Jede Stromschiene 12-15 ist mit einem
Anschlusselement 16, 17, 18, 19 an den Aussenflächen des prismatischen Hohlkörpers 10 elektrisch leitend verbunden. Der
Hohlraum 11 ist wenigstens angenähert zur Hälfte mit einem
flüssigen Elektrolyten 20 gefüllt. Die Unterbrechungen 21, 22,
23, 24 zwischen den sich auf dem Umfang der Zylinderwand des Hohlraumes 11 folgenden Stromschienen 12, 14 und 13, 15 liegen auf Ebenen, die 30$^o$ zu den Kanten des prismatischen Hohlkörpers 10 angeordnet sind.

Wenn nun an einem ersten Paar Stromschienen 12, 13 eine Stromquelle angeschlossen wird, kann am andern Paar Stromschienen 14, 15 eine Spannung gemessen werden. Oder es kann ein Stromkreis am zweiten Stromschienenpaar angeschlossen werden, in dem ein Strom gemessen werden kann, oder es könnte auch der elektrische Widerstand zwischen Paaren von Stromschienen gemessen werden. Es hat sich gezeigt, dass die Werte in weiten Grenzen variieren und dass somit auf einfache Weise ein Geber für die Abweichung des Spiegels des flüssigen Elektrolyten 20 von einer Bezugslage geschaffen wurde.

Es ist bekannt, dass bei der Messung von Spannungen vielfach Schwierigkeiten bezüglich der Anpassung zwischen dem Messinstrument und dem Messwertgeber bestehen können. Es muss deshalb ein Vorverstärker vorgesehen werden. Das Schaltungsschema eines solchen Vorverstärkers ist in Fig. 2 dargestellt.

Vom Eingangsanschluss E wird die Messspannung einem ersten Operationsverstärker A1 zugeführt. Dieser arbeitet als Impedanzwandlerstufe und legt einen hochohmigen Eingang fest. Ueber einen Vorwiderstand R1 ist der Ausgang des ersten

Operationsverstärkers A1 mit einem Eingang eines zweiten Operationsverstärkers A2 verbunden. Ein einstellbarer Gegenkopplungswiderstand P1 verbindet den Ausgang dieses Operationsverstärkers A2 mit dem genannten Eingang. Durch geeignete Bemessung der beiden Widerstände R1 und P1 kann der

Verstärkungsgrad V dieses invertierenden Operationsverstärkers eingestellt werden: $V = \frac{P1}{R1}$.

Ueber einen weiteren Vorwiderstand R2 ist ein dritter Operationsverstärker A3 mit dem Ausgang des zweiten Operationsverstärkers A3 verbunden. Auch dieser dritte Operationsverstärker A3 arbeitet als invertierender Operationsverstärker mit einem Verstärkungsgrad V = 1. Der Widerstand R3 dient als Gegenkopplung. Damit kann dieser dritte Operationsverstärker A3 als Addierer betrieben werden, und zu dem zu messenden Signal am  Eingang E gegenüber Masse O kann eine feste

Spannung zur Offset-Kompensation addiert werden. Diese feste Spannung kann mit dem einstellbaren Widerstand P4 eingestellt werden.

Die Speiseleitungen für den Betrieb der drei Operationsverstärker A1, A2 und A3 sind lediglich andeutungsweise eingezeichnet. Am Ausgang des Operationsverstärkers A3 kann die verstärkte Spannung abgenommen werden. Der Wert dieser Spannung lässt sich mit dem Potentiometer P3 dem nachfolgenden Anzeigeteil genau anpassen.

Als Anzeigeteil kann ein Digitalvoltmeter mit LCD-Anzeige vorgesehen werden. Indem solche Anzeigeteile auf dem Markt erhältlich sind, erübrigt sich eine eingehende Beschreibung.

Eine Anwendung des Messwertgebers mit dem beschriebenen Vorverstärker ist in Fig. 3 dargestellt. In einer Messlatte 30 ist ein Messwertgeber 31, in gleicher Ausführungsform wie unter Fig. 1 beschrieben, eingebaut. In zwei weiteren Hohlräumen 32, 33 sind einerseits die elektronische Anordnung zur Messwertauswertung 34 und anderseits die Batterien 35 zur Speisung der Anordnung 34 untergebracht. Die beiden Hohlräume 32, 33 können durch einen gemeinsamen Deckel 36 verschliessbar sein, wobei dann die elektrischen Verbindungen in diesem Deckel 36 angeordnet sein könnten oder der Hohlraum 33 für die Batterien 35 kann allein mit einem wegnehmbaren Deckel 36 verschliessbar sein.

Die elektronische Anordnung zur Messwertauswertung 34 umfasst sinngemäss den Vorverstärker gemäss Fig. 2 und ein Anzeigegerät, nämlich ein Voltmeter. Der Anzeigeteil 37 des Voltmeters kann in bei Wasserwaagen üblicher Weise mittig auf einer Längsstirnseite 41 angeordnet sein und drei Anzeigefelder 38, 39, 40 zum leichten Ablesen von drei Seiten her aufweisen.

An einer beliebigen Stelle sind noch Bedienungselemente,
z.B. Drucktasten 42, 43, 44, 45 und 46 angeordnet. Beispielsweise kann die Drucktaste 42 zum Ein-/Ausschalten bestimmt
sein. Die übrigen Drucktasten 43, 44, 45 können zur Bereichsumschaltung dienen, um die Abweichung von der Horizontalen
in mm/m, in Grad oder in Prozenten wählbar anzeigen zu
können.

Eine letzte Drucktaste 46 kann zur Eichung vorgesehen sein.
Selbstverständlich könnte an der schmalen Stirnseite 47 ein
weiteres Anzeigefeld vorgesehen sein, um die Werte in vertikaler Stellung der Messlatte anzeigen zu können.

Gegenüber den bisher bekannten Wasserwaagen mit einer Libelle
hat eine solche Anordnung den Vorteil, dass die Werte digital angezeigt werden können und nicht aus einer relativen
Auslenkung einer Libelle interpoliert werden müssen. Zudem
kann der Messbereich wesentlich vergrössert werden, nämlich
auf den Bereich $-15^{\circ}$ ./. $+105^{\circ}$, was mit den herkömmlichen
Wasserwaagen nicht möglich war.

Anstelle der beschriebenen Spannungsmessung könnte auch der
Widerstand, der Strom oder die Kapazität gemessen werden. Dazu
müsste lediglich am Eingang des Vorverstärkers gemäss Fig. 2 ein
entsprechendes bekanntes Netzwerk angeschaltet werden. Neben den Drucktasten können noch Anzeigelampen oder LCD-Indikatoren vorgesehen werden, um Betriebszustände zu signalisieren. Diese Anzeigen könnten in bekannter Weise auch mit den Drucktasten kombiniert werden.

Bei einer Kapazitätsmessung müssten anstelle der beschriebenen Stromschienen plattenförmige Elektroden an Grund- und Deckfläche des Hohlraumes angeordnet werden und die Flüssigkeit müsste dementsprechend ein Elektrolyt sein. Auch hier wäre eine Unterteilung der Platten unter einem Winkel von $30^{\circ}$ vorzunehmen.

P a t e n t a n s p r ü c h e

1. Messinstrument zum Feststellen von Abweichungen von
   Linien oder ebenen Flächen bezüglich dem Lot und/oder
   der Waagrechten, gekennzeichnet durch einen gasdicht verschlossenen Hohlkörper (10) mit einer den Hohlraum (11)
   höchstens teilweise füllenden elektrisch leitenden Flüssigkeit, durch wenigstens ein Paar, mit wenigstens einem
   Teil ihrer Oberfläche in die Flüssigkeit eintauchende,
   im Hohlkörper (10) starr gehalterte Elektroden (12-15),
   und durch Mittel (34, 35, 37) zur Messung einer elektrischen Grösse zwischen den genannten Elektroden.

2. Instrument nach Patentanspruch 1, dadurch gekennzeichnet,
   dass der Hohlraum (11) im Hohlkörper (10) zylindrisch
   mit wenigstens angenähert planparallelen Flächen als
   Grundfläche und Deckfläche ausgebildet ist.

3. Instrument nach Patentanspruch 1 oder 2, dadurch gekennzeichnet, dass als Elektroden längliche Stromschienen (12-15) vorhanden sind, die parallel zur Zylinderwand des Hohlraumes (11) angeordnet sind.

4. Instrument nach Patentanspruch 3, dadurch gekennzeichnet, dass zwei Paare Stromschienen (12, 13; 14, 15) vorhanden sind.

5. Instrument nach Patentanspruch 4, dadurch gekennzeichnet, dass die Stromschienen (12-15) stabförmig ausgebildet sind, dass sie paarweise auf wenigstens dem grössten Teil des Umfangs der zylindrischen Wand angeordnet sind.

6. Instrument nach Patentanspruch 5, dadurch gekennzeichnet, dass die Unterbrüche zwischen den Paaren von Stromschienen diametral angeordnet sind.

7. Instrument nach Patentanspruch 6, dadurch gekennzeichnet, dass der Hohlkörper (10) als quadratisches Prisma ausgebildet ist, und dass sich die Unterbrüche beidseits einer Diagonalebene erstrecken.

8. Instrument nach einem der Patentansprüche 1 bis 7, dadurch gekennzeichnet, dass an das eine Paar Stromschienen eine Spannung angelegt ist und dass als elektrischer Wert die Spannung am andern Paar Stromschienen als Mass für die Abweichung verwendet ist.

9. Instrument nach Patentanspruch 1, dadurch gekennzeichnet, dass die Elektroden zwei im Abstand voneinander angeordnete, wenigstens den grössten Teil der Querschnittsfläche des Hohlraumes überdeckende Platten sind.

10. Instrument nach Patentanspruch 9, dadurch gekennzeichnet, dass die Platten Kondensatorplatten sind und dass die Flüssigkeit ein Elektrolyt ist.

11. Instrument nach Patentanspruch 8, gekennzeichnet durch einen Messverstärker zur Darstellung des elektrischen Wertes in digitaler Form.

12. Verwendung des Instrumentes nach Patentanspruch 1 in einer Messlatte (30) als elektrisch anzeigende Wasserwaage, dadurch gekennzeichnet, dass der in digitaler Form dargestellte elektrische Wert als Winkel, als prozentuale Abweichung oder als Abweichung in Form eines Längenmasses angezeigt wird.

**Fig. 1**

**Fig. 2**

**Fig. 3**